# EUROPEAN PATENT APPLICATION

(11) **EP 1 553 583 A2**
(43) Date of publication of application: **13.07.2005**
(21) Application number: 04106960.0
(22) Date of filing: 23.12.2004
(51) Int. Cl.: G11B 20/00, G11B 20/18

(54) **Recording medium, recording medium writing device, recording medium reading device, recording medium writing method, and recording medium reading method**

(30) Priority: 09.01.2004 JP 2004004710
(71) Applicant: Kabushiki Kaisha Toshiba, Tokyo 105-8001 (JP)
(72) Inventor: Kojima, Tadashi, 105-8001, Tokyo (JP); Yamada, Hisashi, 105-8001, Tokyo (JP); Ishihara, Atsushi, 105-8001, Tokyo (JP); Kato, Taku, 105-8001, Tokyo (JP); Isozaki, Hiroshi, 105-8001, Tokyo (JP); Matsushita, Tatsuyuki, 105-8001, Tokyo (JP); Matsukawa, Shinichi, 105-8001, Tokyo (JP)
(74) Representative: Henkel, Feiler & Hänzel

(57) **Abstract**

Embedded proprietary data, which is configured by embedding decoding key data for decoding encoded contents into proprietary data that is a subject of ownership, is recorded on a recording medium. Since the decoding key data is embedded into the proprietary data, it is difficult to separate and take out the decoding key data from the proprietary data. When copying or the like including the proprietary data is performed, it becomes possible to legally pursue a copy or the like of the proprietary data.

## Description

### CROSS REFERENCE TO THE INVENTION

This application is based upon and claims the benefit of priority from the prior Japanese Patent Application No. 2004-4710, filed on January 3, 2004; the entire contents of which are incorporated herein by reference.

### BACKGROUND OF THE INVENTION

### 1. FIELD OF THE INVENTION

The present invention relates to a recording medium for recording various contents such as images, sounds, and the like, a recording medium writing device, a recording medium reading device, a recording medium writing method, and a recording medium reading method.

### 2. DESCRIPTION OF THE RELATED ART

A recording medium such as a CD (Compact Disk), a DVD (Digital Versatile Disk), and the like is used for storage, distribution, or the like of various contents such as images, sounds, texts, and the like. In other words, contents can be recorded on a recording medium to be stored and distributed.

Here, the contents are generally a copyrighted work which needs to be prevented from being illegally copied, so that a copyright protection technology is used.

For this purpose, encoding of contents and recording them on a storage medium are generally performed. When reproducing the contents, an encryption key is used to decode the encoded contents. In this manner, the contents cannot be reproduced as long as the encryption key is in a confidential state. To turn the encryption key into a confidential state, the encryption key itself is encoded and recorded on the recording medium.

This technique cannot respond to a case that the entire data (including both the encoded contents and the encoded encryption key) recorded on the recording medium is copied to another recording medium.

Accordingly, there is disclosed a technology to provide on a recordable optical disk a disk identification information area for reproduction only, which is separated from a normal data recording and reproducing area and records disk identification information by removing a reflective layer on the optical disk in a stripe shape (refer to Japanese Patent Application Laid-open No. 2001-189015).

### SUMMARY OF THE INVENTION

When information for identifying a recording medium is recorded on the recording medium, it is difficult to prevent illegal copying of a copyrighted work in a case that the recording medium itself is copied.

In view of the foregoing, an object of the present invention is to provide a recording medium, a recording medium writing device, a recording medium reading device, a recording medium writing method, and a recording medium reading method by which contents can be protected even when the entire data of the recording medium is copied, or moreover, even when the recording medium itself is copied.
A. To achieve the above-described object, a recording medium according to the present invention has embedded proprietary data, which is configured by embedding decoding key data for decoding encoded contents into correcting code added proprietary data, which is configured by adding an error correcting code to proprietary data that is a subject of ownership.
   Since the decoding key data is embedded into the proprietary data, it is difficult to obtain the decoding key data. When copying or the like of contents is attempted without taking out the decoding key data from the embedded proprietary data, the copying or the like must be done including the proprietary data as well. In such a case, it becomes possible to legally track the copy or the like of the proprietary data, so that responding to illegal copying of the entire data recorded on the recording medium or of the recording medium itself for example becomes easy.
   (1) Examples of the ownership include a copyright, a trademark, and a well-known name.
      When the proprietary data is data having a characteristic of copyrighted work, such as data of images and sounds, it becomes possible to pursue a legal responsibility of copying or the like of the proprietary data as an infringement of copyright.
      Further, when the proprietary data exhibits a function of trademark, a legal responsibility of copying or the like of the proprietary data can be pursued as an infringement of trademark or as an illegal act based on the Unfair Competition Prevention Law. One case of exhibiting the function of trademark is that a design of the trademark of a manufacturer of the recording medium is reproduced when the recording medium is set in a reproducing device (a disk drive or the like). This is because the proprietary data will be recognized as a trademark by a customer as a result of performing demonstration in a sales shop. In this case, selling of a recording medium on which entire data including the proprietary data is copied can constitute an infringement of trademark.
   (2) The decoding key data can be configured to be broken by performing error correction processing on the embedded proprietary data using the error correcting code.
      Specifically, confidentiality of the decoding key data can be kept by configuring the decoding key data so as not to be obtained from the embedded proprietary data on which the error correction processing is performed. In a case that the error correcting code is created from only the proprietary data, when the error correction is performed using this error correcting code, the original proprietary data is reproduced from the embedded proprietary data, but the decoding key data disappears. Therefore, information of the decoding key data is not to be included in a normal output from the reproducing device.
      For separation of the decoding key data, error correcting processing can be used. In other words, the decoding key data can be reproduced from an error pattern detected during an error correction processing step. In addition, by comparing the embedded proprietary data before and after the correction, it is also possible to reproduce the decoding key data.
   (3) The embedded proprietary data may be generated by replacing a part of the proprietary data in the correcting code added proprietary data by the decoding key data.
      By replacing a part of the proprietary data by the decoding key data, the decoding key data can be embedded.
      Here, in advance of the replacement, the correcting code added replicator proprietor data may be modulated by a first modulating method, and the decoding key data may be modulated by a second modulating method, which is different from the first modulating method.
      Specifically, the decoding key data can be configured to be broken when the embedded proprietary data is demodulated by a first demodulating method corresponding to the first modulating method. As a result, it becomes difficult to extract the decoding key data from demodulated data outputted from a main data decoder which decodes main data such as the proprietary data, contents, and the like.
      Incidentally, to obtain the decoding key data, the embedded proprietary data should be decoded by a second demodulating method corresponding to the second modulating method.
   (4) The embedded proprietary data may include operation data obtained by performing operation processing of a part of the proprietary data in the correcting code added proprietary data and the decoding key data.
      The operation of data with each other can be used to embed the decoding key data.
      As the operation, for example, addition of a part of the proprietary data to the decoding key data can be used. Incidentally, as the operation, other operation such as multiplication or the like can be used.
      By thus performing operation of the data with each other, concealment of the decoding key data can be strong. In other words, it becomes difficult for a third person to directly separate the decoding key data itself from the embedded proprietary data.
   (5) The decoding key data may be arranged in a dispersed manner inside the embedded proprietary data.
      By arranging the decoding key data in a dispersed manner, obtaining the decoding key data by a third person can be difficult.
      Here, the embedded proprietary data may include data representing an arrangement of the decoding key data in the embedded proprietary data. Using this data, a position for separating the decoding key data can be determined.
   (6) The recording medium may further include a key data error correcting code recorded therein for correcting an error of the decoding key data.
      This enables a response to a case that an error occurs in the recorded decoding key data for some reason.
      Here, the key data error correcting code may be included in the embedded proprietary data.
      The error correcting code is not added to the decoding key data itself to be embedded, so that an amount of data to be embedded into the correcting code added proprietary data can be reduced. This is done because embedding of a large amount of data is not desirable since embedding of data into the correcting code added proprietary data causes an error in the correcting code added proprietary data.
   (7) The proprietary data may include unconfirmable data which is not confirmed while reproducing the recording medium.

   Here, "unconfirmable" means that, when viewing/listening images or sounds reproduced from the recording medium, the unconfirmable data does not appear as images or sounds, or even when it appears, it is recognized as meaningless noise. In other words, the unconfirmable data functions as a so-called invisible watermark.
   When such unconfirmable data is used, tracking can be made easy in a case of unauthorized copying of a recording medium. Specifically, when the recording medium is copied, the unconfirmable data is also copied, so that a source of original data can be easily confirmed.
   The unconfirmable data may function as second decoding key data for decoding the encoded contents. By combining the decoding key data to decode encoded contents, decoding of codes by a third person can be difficult.
   Thus, the unconfirmable data can be used for confirming a source of data and for encoding/decoding of contents.
B. A recording medium writing device according to the present invention has a unit which generates embedded proprietary data, which is configured by embedding decoding key data for decoding encoded contents into proprietary data that is a subject of ownership, and a unit which writes the generated embedded proprietary data on a recording medium.
   Using the recording medium writing device, it is possible to create a recording medium on which the embedded proprietary data, which is configured by embedding the decoding key data into the proprietary data, is recorded. Asaresult, it becomes easy to respond to illegal copying of entire data recorded on the recording medium or of the recording medium itself.
C. A recording medium reading device according to the present invention has a unit which reads encoded contents from a recording medium; a unit which reads embedded proprietary data, which is configured by embedding decoding key data for decoding encoded contents into proprietary data that is a subject of ownership, from the recording medium; a unit which separates the decoding key data from the read embedded proprietary data; and a unit which decodes the read encoded contents using the separated decoding key data.
   Using the recording medium reading device, contents can be reproduced from a recording medium on which the embedded proprietary data, which is configured by embedding the decoding key data into the proprietary data, is recorded. As a result, it becomes easy to respond to illegal copying of entire data recorded on the recording medium or of the recording medium itself.
D. A recording medium writing method according to the present invention has the steps of generating embedded proprietary data, which is configured by embedding decoding key data for decoding encoded contents into proprietary data that is a subj ect of ownership; and writing the generated embedded proprietary data on a recording medium.
   Using the recording medium writing method, it is possible to create a recording medium on which the embedded proprietary data, which is configured by embedding the decoding key data into the proprietary data, is recorded. As a result, it becomes easy to respond to illegal copying of entire data recorded on the recording medium or of the recording medium itself.
E. A recording medium reading method according to the present invention has the steps of reading encoded contents from a recording medium; reading embedded proprietary data, which is configured by embedding decoding key data for decoding encoded contents into proprietary data that is a subject of ownership, from the recording medium; separating the decoding key data from the read embedded proprietary data; and decoding the read encoded contents using the separated decoding key data.

Using the recording medium reading method, contents can be reproduced from a recording medium on which the embedded proprietary data, which is configured by embedding the decoding key data into the proprietary data, is recorded. As a result, it becomes easy to respond to illegal copying of entire data recorded on the recording medium or of the recording medium itself.

### BRIEF DESCRIPTION OF THE DRAWINGS

FIG. 1 is a plan view representing an optical disk according to a first embodiment of the present invention.
FIG. 2 is a view showing a procedure of recording contents on the optical disk according to the first embodiment of the present invention.
FIG. 3 is a view showing a procedure of reproducing contents from the optical disk according to the first embodiment of the present invention.
FIG. 4 is a view showing a procedure of embedding a media mark using an error pattern.
FIG. 5 is a schematic view representing a state of data during the procedure of FIG. 4.
FIG. 6 is a schematic view representing a state of the data during the procedure of FIG. 4.
FIG. 7 is a schematic view representing a state of the data during the procedure of FIG. 4;
FIG. 8 is a schematic view representing a state of the data during the procedure of FIG. 4.
FIG. 9 is a view showing a procedure of recording contents on an optical disk according to a second embodiment of the present invention.
FIG. 10 is a view showing a procedure of reproducing contents from the optical disk according to the second embodiment of the present invention.
FIG. 11 is a plan view representing an optical disk according to a third embodiment of the present invention.
FIG. 12 is a view showing a procedure of recording data during manufacturing of the optical disk according to the third embodiment of the present invention.
FIG. 13 is a view showing a procedure of recording contents on the optical disk according to the third embodiment of the present invention.
FIG. 14 is a view showing a procedure of reproducing contents from the optical disk according to the third embodiment of the present invention.
FIG. 15 is a view showing a procedure of recording contents on an optical disk according to a fourth embodiment of the present invention.
FIG. 16 is a view showing a procedure of reproducing contents from the optical disk according to the fourth embodiment of the present invention.
FIG. 17 is a view showing a procedure of embedding a media mark using a special modulating method according to a fifth embodiment of the present invention.
FIG. 18 is a schematic view showing a physical sector of a case that a media mark (MM) signal is embedded using the special modulating method according to the fifth embodiment of the present invention.
FIG. 19 is a view showing a procedure of embedding a media mark (MM) signal using a special modulating method according to a sixth embodiment of the present invention.
FIG. 20 is a schematic view showing details of FIG. 19 according to the sixth embodiment of the present invention.
FIG. 21 is a view representing steps of generating embedded proprietary data by embedding a watermark into design information inside proprietary data.
FIG. 22 is a view representing a procedure of encoding contents using a media mark and a watermark together.
FIG. 23 is a view representing a procedure of decoding contents using the media mark and the watermark together.

### DESCRIPTION OF THE EMBODIMENTS

Hereinafter, embodiments of the present invention will be described in detail with reference to the drawings.

### (First Embodiment)

### A. Recording Medium

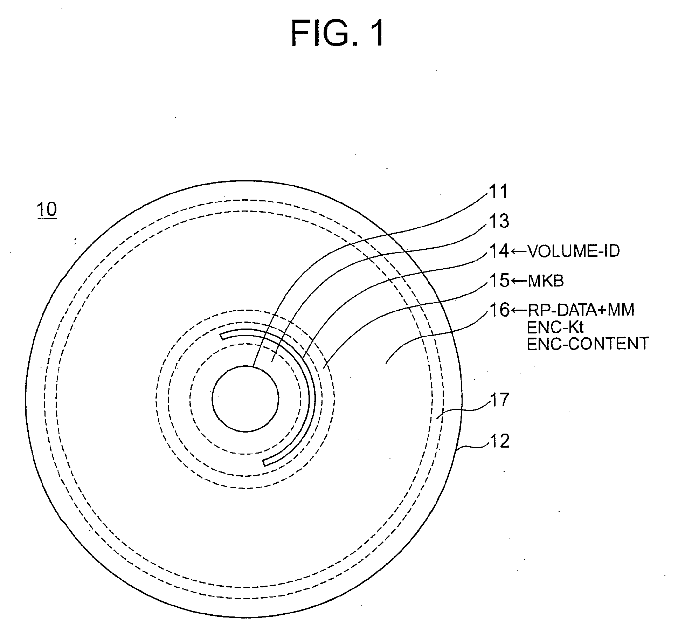

FIG. 1 is a plan view representing an optical disk 10 for reproduction only that is a recoding medium according a first embodiment of the present invention.

On the optical disk 10 for reproduction only, a clamping area 13, a BCA (Burst Cutting Area) 14, a lead-in (Lead-IN) area 15, a data area 16, and a lead-out (Lead-OUT) area 17 are arranged between an inner circumference 11 and an outer circumference 12.

The clamping area 13 is an area for retaining the optical disk 10 by a chuck or the like.

The BCA 14 is an area in which a part of a reflective layer of the optical disk 10 is removed by irradiating a laser light in a pulse form from a high-energy laser light source such as a YAG laser, and data is thus recorded thereon in a stripe form as a kind of barcode. Since writing in this area requires a high-energy laser light source, information written in this area is difficult to be copied by a general user (at least, it cannot be written by a general disk drive).

Incidentally, on the optical disk 10 for reproduction only, the BCA 14 may be constituted by embossed pits. Thus, the optical disk 10 for reproduction only can be easily mass-produced from a master disk.

In this embodiment, a volume identifier (Volume-ID) is recorded in the BCA 14. The volume identifier (Volume-ID) indicates contents recorded on the optical disk 10 by a unit of album (for example, one movie or one tune of music). In order words, the volume identifier (Volume-ID) can also be referred to as an album identifier (Album-ID).

As will be described later, the volume identifier (Volume-ID) constitutes one of decoding keys for decoding encoded contents (Enc-contents). By recording the volume identifier (Volume-ID) in the BCA 14 which is difficult to be created and written by a general user, illegal copying of the optical disk 10 is prevented. Specifically, even when the other data on the optical disk 10 is copied on another recording medium, contents cannot be reproduced from that recording medium.

Incidentally, a reason of recording the volume identifier (Volume-ID) in the BCA 14 in this embodiment is to facilitate mass-production of the optical disk 10 on which the same contents are recorded (on a recording medium of recordable type described in other embodiments, a media identifier (Media-ID) which identifies the recording medium is recorded in the BCA 14).

The lead-in area 15 is an area where management information of the optical disk 10 is recorded. Incidentally, on a later-described recordable optical disk 10a, this area is divided into a reproduction only area (embossed area) constituted by embossed pits and a recordable area in which recording can be performed afterward.

In the reproduction only area of the lead-in area 15, a media key block (MKB) is recorded. The media key block (MKB) constitutes one of the decoding keys for decoding the encoded contents (Enc-contents), and is combined with a later-described device key, which is recorded on the reproduction device side or the like, to be used to generate a media key (Km).

The media key block (MKB) is an aggregate of many keys and is supplied from a CP (Copy Protection) management organization, which is established for preventing illegally copying of contents. This media-key block (MKB) is created by reflecting information of a disk drive or the like which is a current target of invalidation due to an exposure of its device key which is supposed to be secret. Therefore, a disk drive or the like which is a target of the invalidation cannot reproduce the optical disk 10 on which the media key block (MKB) corresponding to invalidation of this disk drive is recorded.

Incidentally, in the lead-in area 15, an optimum recording condition (parameter) of the optical disk 10 or information specific to a manufacturing maker of other optical disks 10 can be recorded.

The data area 16 is an area where contents are recorded. These contents include general data which needs copyright protection, such as image data (including static images and moving images) of a movie or the like, sound data of music or the like, software of a computer, and so on.

In the data area 16, embedded proprietary data (RP-Data+MM) and an encoded title key (Enc-Kt) are recorded. However, when there is an extra space in the lead-in area 15, the embedded proprietary data (RP-Data+MM) and the encoded title key (Enc-Kt) may be recorded in that area.

The encoded title key (Enc-Kt) is one produced by encoding a title key (Kt) for decoding encoded contents (Enc-contents).

The embedded proprietary data (RP-Data+MM) is configured by embedding a media mark (MM) into proprietary data (RP-Data) by a confidential information recording and reproducing method such as an electronic watermark.

This proprietary data (RP-data) is data to be a subject of ownership of a copyright, a trademark, a well-known name, or the like. When the proprietary data (RP-Data) is data having a characteristic of copyrighted work, such as data or the like of images and sounds, it becomes a subject of copyright. Further, when the proprietary data (RP-Data) exhibits a function of trademark, it can be a subject of trademark. One case of exhibiting the function of trademark is that a design of the trademark is reproduced when the optical disk 10 is set in a disk drive (reproducing device). This is because the proprietary data will be recognized as a trademark by a customer as a result of performing demonstration in a sales shop for example.

By defining the proprietary data (RP-Data) as a property of a manufacturer of the optical disk 10, the manufacturer can be protected. For example, when data specific to the manufacturer of the optical disk 10 is recorded in the lead-in area 15 or the like, an action of copying this data on another recording medium cannot always be prohibited legally (when this data does not have the characteristic of copyrighted work, it is difficult to be protected). On the other hand, copying or the like of the proprietary data (RP-Data) can be a subject of pursuing a legal responsibility for an infringement of copyright, an infringement of trademark, or an illegal act based on the Unfair Competition Prevention Law, and thus the recording medium manufacturer can be protected.

The media mark (MM) constitutes one of the decoding keys for decoding the encoded contents (Enc-contents). Since it is embedded in the proprietary data (RP-Data), the media mark (MM) is difficult to be separated from the embedded proprietary data (RP-Data+MM) by a third person, so that the contents can be prevented from being copied.

The lead-out area 17 is an area where information representing an end and so on of the data area 16 is recorded.

### B. Recording of Contents on the Recording Medium

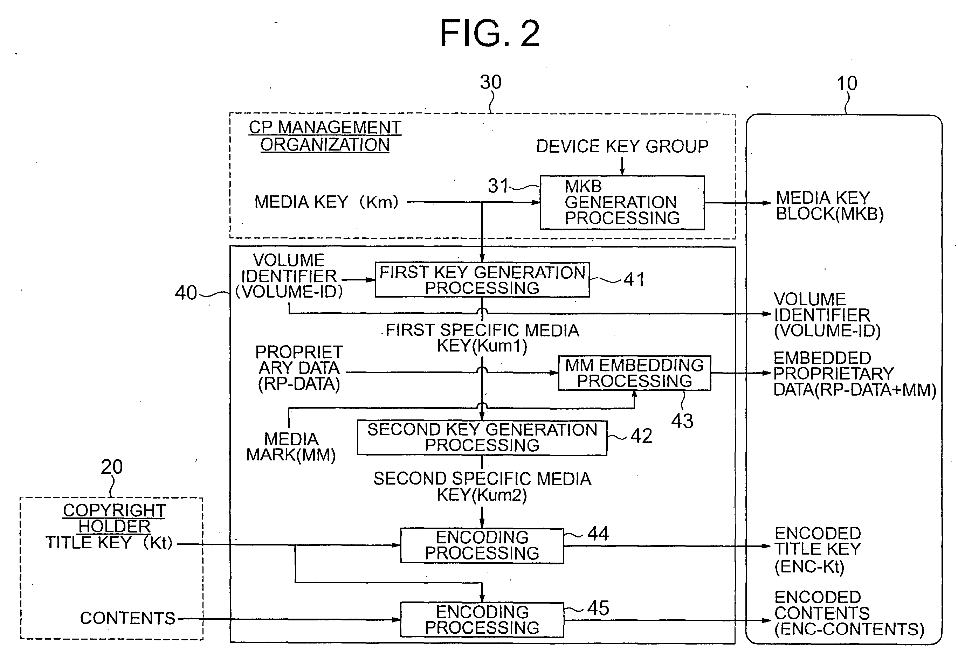

FIG. 2 is a view showing a procedure of recording contents on the optical disk 10.

Using data supplied from a copyright holder 20 and the CP management organization 30, a disk writing device 40 encodes the contents and writes them as encoded contents (Enc-contents) on the optical disk 10.

Incidentally, the copyright holder 20 and the CP management organization 30 are an individual or an organization, who himself/herself or which itself is not an object.

The copyright holder 20 supplies the title key (Kt) and the contents to the recording medium manufacturer.

The CP management organization 30 supplies the media key (Km) and the media key block (MKB) to the disk manufacturer. The media key block (MKB) is generated from a device key group and the media key (Km) by an MKB generation processing unit 31.

The volume identifier (Volume-ID), the proprietary data (RP-Data), and the media mark (MM) are determined appropriately by the disk manufacturer and stored in the disk writing device 40.

The media key block (MKB) is recorded in the lead-in area 15 of the optical disk 10 by the disk writing device 40.

The volume identifier (Volume-ID) is recorded in the BCA 14 by the disk writing device 40.

In a first key generation processing unit 41, a first specific media key (Kum1) is generated from the media key (Km) and the volume identifier (Volume-ID). The generated first specific media key (Kum1) and a media mark (MM) signal are sent to a second key generation processing unit 42 to generate a second specific media key (Kum2).

In an encoding processing unit 44, the title key (Kt) is encoded with the second specific media key (Kum2) to generate an encoded title key (Enc-Kt). The generated encoded title key (Enc-Kt) is recorded in the data area 16 by the disk writing device 40.

In an encoding processing unit 45, the contents are encoded with the not yet encoded title key (Kt) to generate encoded contents (Enc-contents). The generated encoded contents (Enc-contents) are recorded in the data area 16 by the disk writing device 40.

In a media mark embedding processing unit 43, the media mark (MM) is embedded into the proprietary data (RP-Data) to generate an embedded proprietary data (RP-Data+MM). The generated embedded proprietary data (RP-Data+MM) is recorded in the data region 16 by the disk writing device 40.

Incidentally, details of embedding of the media mark (MM) into the proprietary data (RP-Data) will be described later.

### C. Reproduction of Contents from the Recording Medium

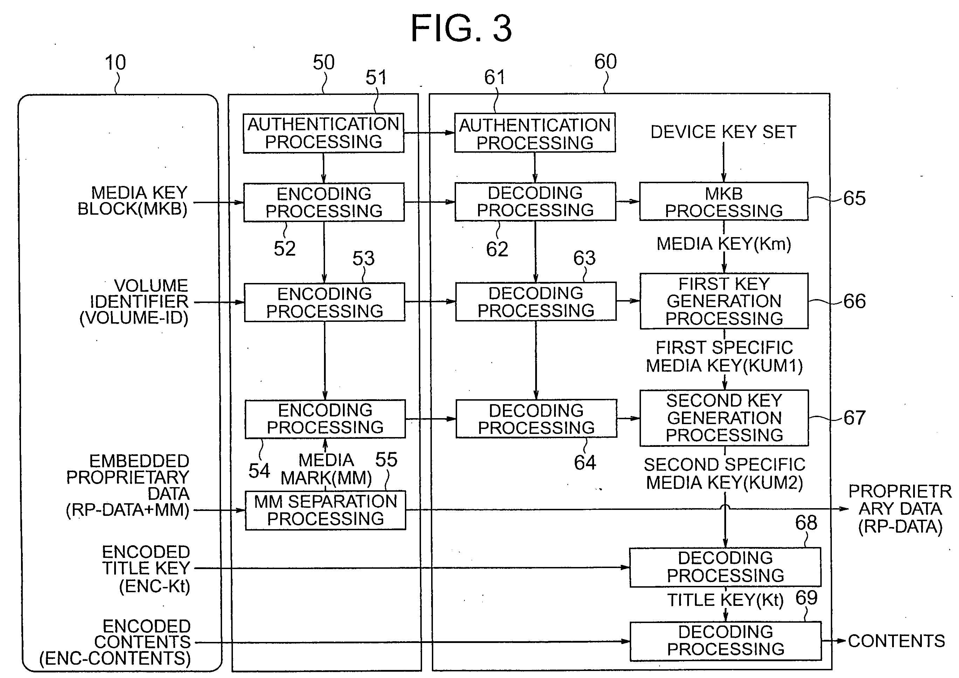

FIG. 3 is a view showing a procedure of reproducing the optical disk 10 to decode the encoded contents (Enc-contents). Here, a configuration of a case that the optical disk 10 is reproduced using a system such as a computer is shown. Specifically, data is read by an optical disk reading device 50, and an AV (Audio Visual) decoder module 60 decodes the encoded contents (Enc-contents).

The optical disk reading device 50 is, for example, a DVD drive which performs reading of data from the optical disk 10. The AV decoder module 60 is, for example, an AV decoder board used in connection to a computer, and outputs reproduced contents.

Authentication is performed mutually between respective authentication processing units 51 and 61 of the optical disk reading device 50 and the AV decoder module 60. This authentication is performed for determining encoding and decoding methods in later-described encoding processing units 52 to 54 and decoding processing units 62 to 64.

By encoding and sending/receiving key information between the optical disk reading device 50 and the AV decoder module 60, leakage of the key information and the like can be prevented.

These encoding and decoding methods can be determined by mutually exchanging random numbers from each of the authentication processing units 51 and 61. The determined encoding and decoding methods are sent from each of the authentication units 51 and 61 to the encoding processing units 52 to 54 and to the decoding processing units 62 to 64, and the key information is encoded and sent from the optical disk reading device 50, thereby enabling decoding in the AV decoder module 60.

Incidentally, when the encoding and decoding methods determined by the authentication are made limitedly usable within a predetermined time, the leakage of the key information or the like can be more strongly prevented. In addition, use of a device key set or the like stored in the AV decoder module 60 for this authentication is useful for preventing unauthorized use of equipment.

After the authentication, the optical disk reading device 50 reads out the media key block (MKB) and the volume identifier (Volume-ID) respectively from the lead-in area 15 and the BCA 14 of the optical disk 10, and transmits them to the AV decoder module 60. Upon this transmission, the media key block (MKB) and the volume identifier (Volume-ID) are encoded and outputted by the encoding processing units 52 and 53, and decoded by the decoding processing units 62 and 63. This is for preventing leakage of the media key block (MKB) and the volume identifier (Volume-ID) from the output of the optical disk reading device 50.

Further, the optical disk reading device 50 reads out the embedded proprietary data (RP-Data+MM) from the data area 16 and separates the media mark (MM) in the media mark separation processing unit 55. Incidentally, details of this separation will be described later.

The separated proprietary data (RP-Data) and media mark (MM) are transmitted from the optical disk reading device 50 to the AV decoder module 60. At this time, the media mark (MM) is encoded and outputted by the encoding processing unit 54, and decoded in the decoding processing unit 64. This is for preventing leakage of the media mark (MM) from the output of the optical disk reading device 50.

Furthermore, the optical disk reading device 50 reads out the encoded title key (Enc-Kt) and the encoded contents (Enc-contents) from the data area 16 and transmits them to the AV decoder module 60.

In the AV decoder module 60, the following processing is carried out. Specifically, in a media key block processing unit 65, a media key (Km) is generated from the media key block (MKB) and the device keys which are stored in the AV decode module 60. Further, in a first key generating unit 66, a first specific media key (Kum1) is generated from the media key (Km) and the volume identifier (Volume-ID). In a second key generating unit 67, the first specific media key (Kum1) is converted with the media mark (MM) into a second specific media key (Kum2).

In a decoding processing unit 68, the read-out encoded title key (Enc-Kt) is decoded with the second specific media key (Kum2) to generate a title key (Kt). In a decoding processing unit 69, the title key (Kt) is used as a decoding key for decoding the encoded contents (Enc-contents) to reproduce contents in plaintexts.

The proprietary data (RP-Data) outputted from the AV decoder module 60 can be appropriately used in a computer or the like, and can be used, for example, to display a trademark of a disk manufacturer before viewing the actual contents.

### D. Embedding/Separating of the Media Mark (MM) into/from the Proprietary Data

Details of embedding/separating of the media mark (MM) into/from the proprietary data (RP-Data) will be described. As will be described later, an embedded media mark (MM) disappears in normal reproduction processing of the optical disk 10 so as not to be easily read out by the optical disk reading device 50. The embedded media mark (MM) is, so to speak, an "electronic watermark that disappears."

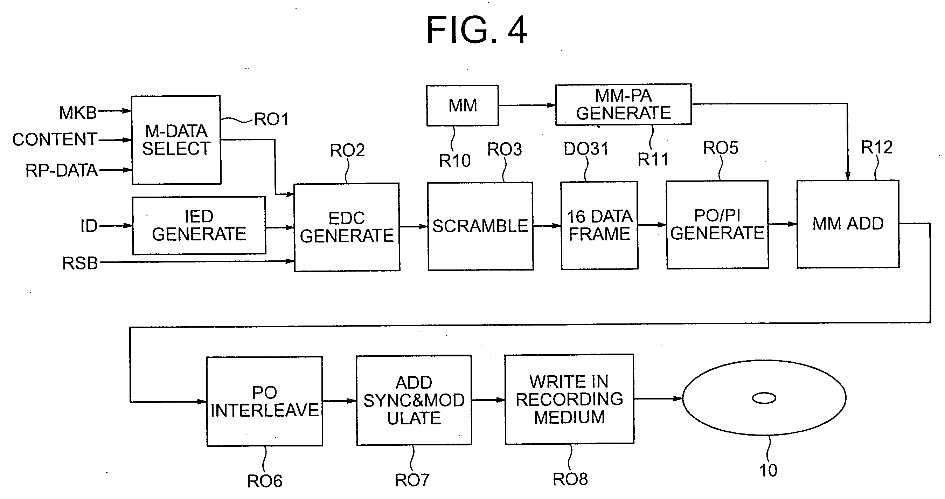

FIG. 4 is a view showing a procedure of embedding the media mark (MM) using an error pattern.

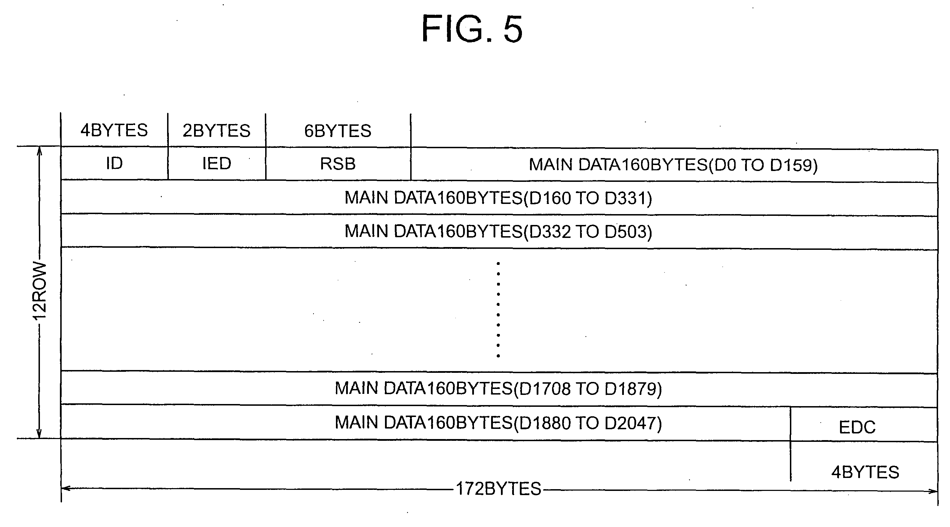

Further, FIG. 5 to FIG. 8 are schematic views representing states of data during the procedure of FIG. 4.

The media key block (MKB), the contents and the proprietary data (RP-Data) are sent as main data (M-Data) along with a sector ID, other auxiliary data RSB (Reserve), and so on to an EDC (Error Detection Code) generating unit R02 to generate an EDC. At this time, the data is sectored into data sectors.

FIG. 5 is a schematic view showing a structure of the data sectors.

The data sectors are constituted by 12 rows (one row = 172 bytes). On a first row, a sector identifier (ID) which is constituted by a sector number and sector information is arranged, and subsequently there are an ID error detecting code (IED), auxiliary data (RSB), and a main data area of 2 Kbytes thereafter. On the end of a last row, an error detecting code (EDC) for main data is added.

In a scramble unit R03, the main data (M-Data) is scrambled. This data scrambling is performed even in a case that the main data (M-Data) is "all '0' ", so as to prevent recorded data from becoming a repeat of the same pattern. This is because there is a concern of occurrence of a problem such that a tracking servo error signal cannot be accurately detected due to a cross talk or the like of adjacent tracks on the optical disk 10.

Sixteen data frames are aggregated in a 16 data frame aggregating unit D031 to generate error correcting codes PO (outer parity)/PI (innerparity) in a PO/PI generating unit R05. Asaresult, the main data (M-Data) is divided into ECC (error correcting code) blocks by a unit of 16 sectors. In other words, the proprietary data (RP-Data) becomes ECC blocks to which the error detecting codes are generated and added.

In a media mark error correcting code generating unit R11, a media mark error correcting code (MM-Pa) is generated from the media mark (MM).

In a media mark adding unit R12, the media mark (MM) and the media mark error correcting code (MM-Pa) are superposed and added to a part of the proprietary data (RP-Data) in the ECC block. Specifically, by adding a part of the proprietary data (RP-Data) and the media mark (MM), the media mark (MM) is embedded into the proprietary data (RP-Data) to thereby generate embedded proprietary data (RP-Data+MM). Incidentally, the addition at this time is exclusive OR, which means "1 + 0 = 1", "1 + 1 = 0".

By thus performing operation of data with each other, concealment of the decoding key data becomes strong. In other words, it becomes difficult for a third person to directly separate the decoding key data itself from the embedded proprietary data (concealment is stronger than a case that a part of the proprietary data (RP-Data) is replaced by the media mark (MM)).

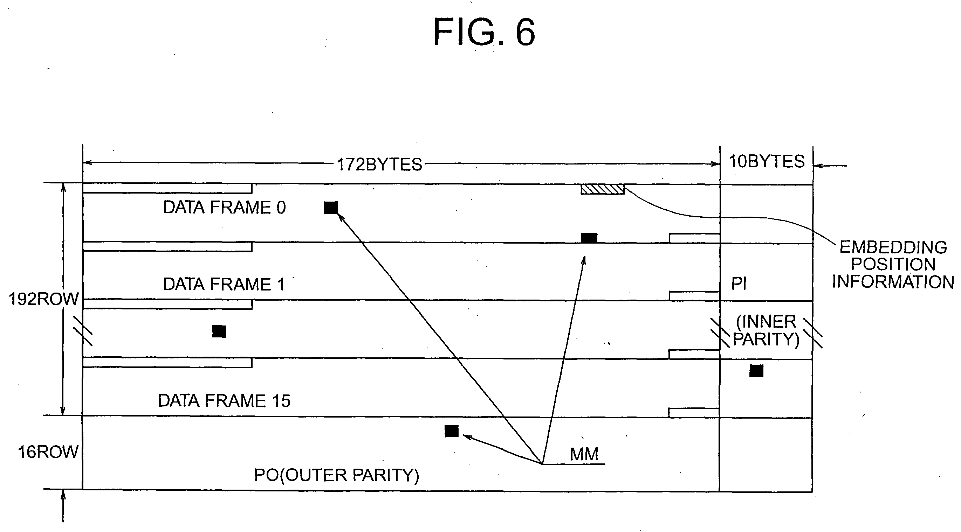

FIG. 6 is a schematic diagram representing the ECC block in which the media mark (MM) is embedded.

With respect to the ECC blocks, outer parities PO of 16 bytes (1 byte = 1 row) are generated for each column (longitudinal direction), and inner parities PI of 10 bytes are generated for each row (lateral direction). The outer parities PO of 16 rows (16 bytes) are arranged in such a manner that one row (byte) is dispersed to every 12 rows (each sector).

Here, the media mark (MM) is dispersed and embedded to thereby improve confidentiality of the media mark (MM). Further, an embedding position of a media mark (MM) signal is indicated by embedding position information, which is arranged at a specific position in the proprietary data (RP-Data).

At this time, the embedding position of the media mark (MM) is determined by a function, and the embedding position information can be used as data to be inputted to the function. By such a method, the embedding position of the media mark (MM) signal differs according to contents of the proprietary data (RP-Data), so that security can be increased.

Thereafter, the outer parity PO is interleave-processed in a PO interleave unit R06, SYNC (synchronization signal) addition andmodulation processing is performed in a SYNC addition & modulation processing unit R07, and data is recorded on the optical disk 10 in a recording medium writing unit R08.

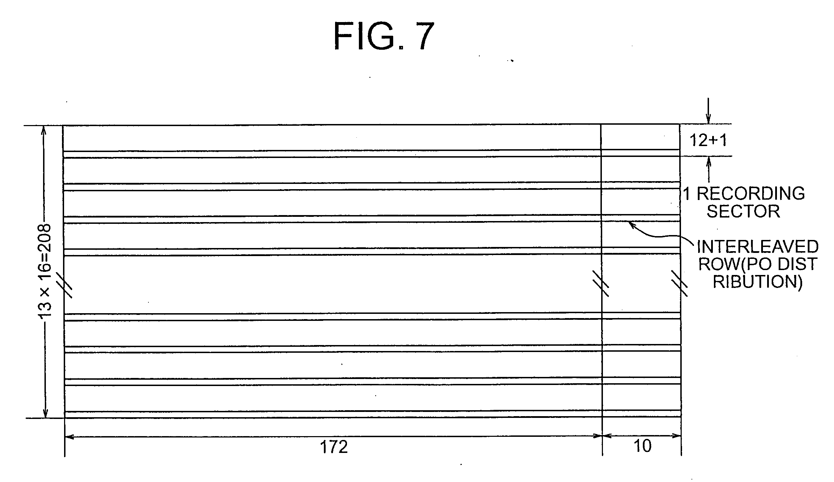

FIG. 7 is a schematic view representing a configuration of the ECC block after the PO is interleaved.

The outer parities PO of 16 rows (16 bytes) are arranged in such a manner that one row (byte) is dispersed to every 12 rows (each sector). A part (one row) of the outer parities PO is added to the sector (12 rows) shown in FIG. 5, which become 12 rows + 1 row to be interleaved.

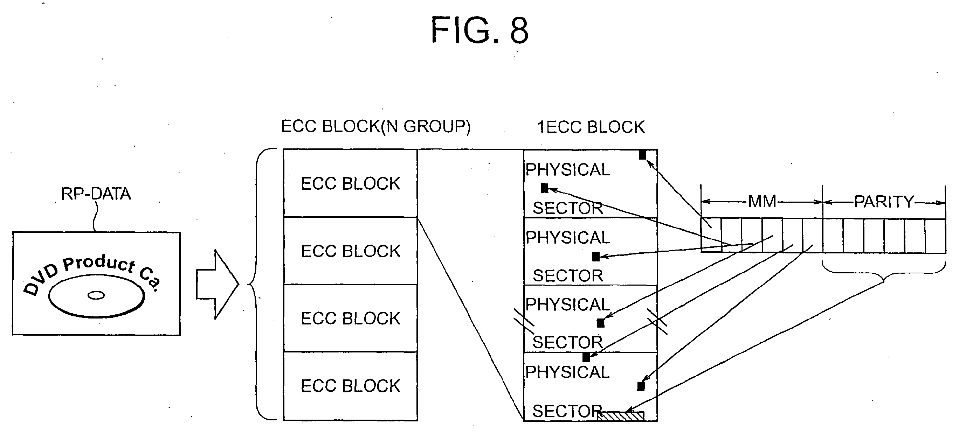

FIG. 8 is a schematic view showing how the proprietary data (RP-Data) and the media mark (MM) signal are arranged in the ECC blocks.

The proprietary data (RP-Data) is divided into plural ECC blocks to be arranged.

The media mark (MM) is arranged inside one ECC block. However, it is arranged in a dispersed manner to plural physical sectors. Further, the media mark error correcting code (MM-Pa) is arranged in a last physical sector.

By thus arranging the media mark (MM) inside one ECC block, the media mark (MM) can be easily embedded in plural ECC blocks (multiple writing of the media mark (MM)), so that reliability of the media mark (MM) improves.

Next, separation of the media mark (MM) from the embedded proprietary data (RP-Data+MM) will be described. As already described, the media mark (MM) is separated from the embedded proprietary data (RP-Data+MM) by the media mark separation processing unit 55.

For this separation, error correction processing can be used. Specifically, when the error correction processing is performed on the embedded proprietary data (RP-Data+MM), an error pattern is detected during the process. This error pattern corresponds to the media mark (MM), so that the media mark (MM) can be reproduced from the error pattern.

In addition, the media mark (MM) can also be reproduced by comparing the embedded proprietary data (RP-Data+MM) before and after the error correction processing.

In this embodiment, the media mark (MM) is arranged in a dispersed manner, but the embedding position information of FIG. 6 can be used to reproduce the media mark (MM) from the error pattern or the like.

### (Second Embodiment)

Next, a second embodiment of the present invention will be described. In this embodiment, an optical disk 10 similar to that of the first embodiment is used, so that the description of the optical disk 10 itself is omitted.

### A. Recording Contents on a Recording Medium

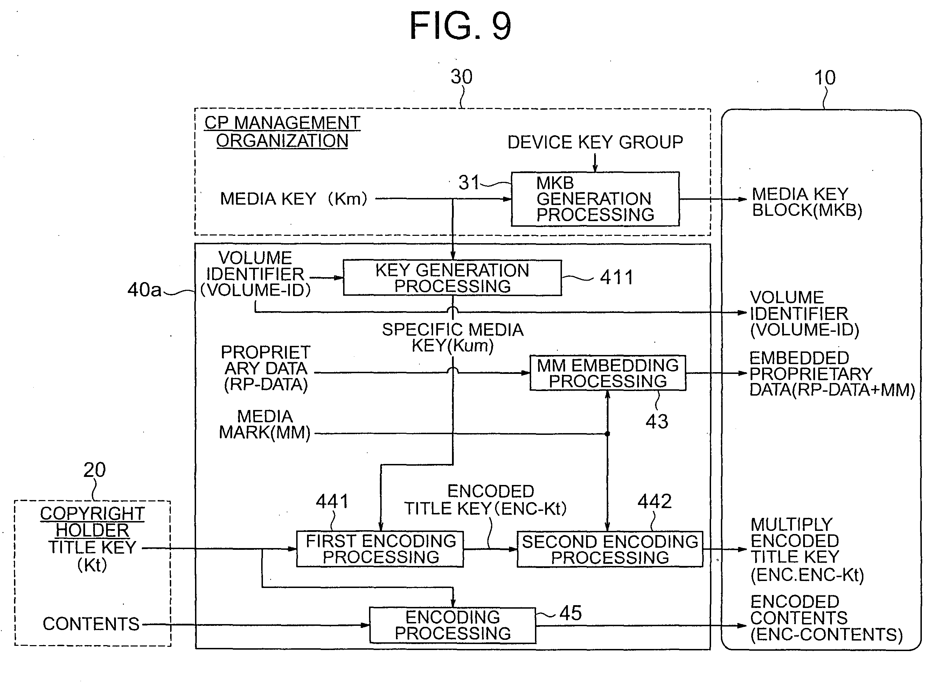

FIG. 9 is a view showing a procedure of recording contents in an optical disk 10. This view corresponds to FIG. 2.

Here, instead of the first and second key generation processing units 41 and 42 of FIG. 2, a key generation processing unit 411 is arranged. Further, instead of the encoding processing unit 44 of FIG. 2, first and second encoding processing units 441 and 442 are arranged.

In the key generation processing unit 411, a specific media key (Kum) is generated from a media key (Km) and a volume identifier (Volume-ID).

In the first encoding processing unit 441, a title key (Kt) is encoded with the specific media key (Kum) and becomes an encoded title key (Enc-Kt). Furthermore, in the second encoding processing unit 442, the encoded title key (Enc-Kt) is encoded in a cascade with a media mark (MM) to generate a multiply encoded title key (Enc.Enc-Kt). The generated multiply encoded title key (Enc. Enc-Kt) is recorded on the optical disk 10.

Incidentally, a means of embedding and recording the media mark (MM) in proprietary data (RP-Data) by an electronic watermark technology is the same as that of the first embodiment.

By this configuration, it is possible to confine a media mark (MM) signal inside a disk drive (optical disk reading device 50a). This will be described later.

### B. Reproduction of Contents from the Recording Medium

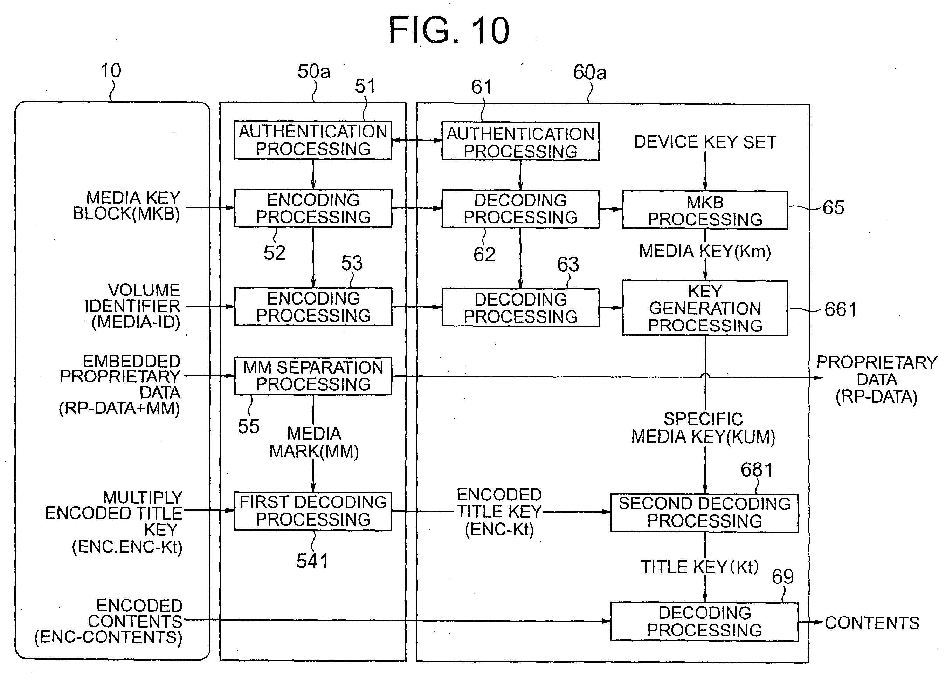

FIG. 10 is a view showing a procedure of reproducing the optical disk 10, which is recorded by the method shown in FIG. 9, to thereby decode the encoded contents (Enc-contents). FIG. 10 corresponds to FIG. 3.

Here, instead of the first and second key generation processing units 66 and 67 of FIG. 3, a key generation processing unit 661 is arranged. Further, instead of the decoding processing unit 68 of FIG. 3, first and second decoding processing units 541 and 681 are arranged.

By an optical disk reading device 50a, embedded proprietary data (RP-Data+MM) is read out from the optical disk 10, and the media mark (MM) is separated by a media mark separation processing unit 55.

The multiply encoded title key (Enc.Enc-Kt) read out by the optical disk reading device 50a from the optical disk 10 is decoded in the first decoding processing unit 541 to generate the encoded title key (Enc-Kt), which is then sent to an AV decoder module 60a.

In the AV decoder module 60a, a specific media key (Kum) is generated from the media key (Km) and the volume identifier (Volume-ID) in the key generation processing unit 661. In the second decoding processing unit 681, the encoded title key (Enc-Kt) is decoded by the specific media key (Kum) to generate the title key (Kt).

The encoded contents (Enc-contents) are decoded by the title key (Kt) to reproduce contents in plaintexts.

As is clear from the foregoing, the media mark (MM) separated from the embedded proprietary data (RP-Data+MM) is used only inside the optical disk reading device 50a, and outputting of which to the AV decoder module 60a is not necessary. Specifically, since the media mark (MM) will not be included in data read out by the optical disk reading device 50a, it becomes possible to prevent reading out of the media mark (MM) and using it to decode the encoded contents (Enc-contents) by a third person.

### (Third Embodiment)

Next, a third embodiment of the present invention will be described. In this embodiment, a recording/reproducing medium, which is an optical disk that is recordable by a user, is used.

### A. Recording Medium

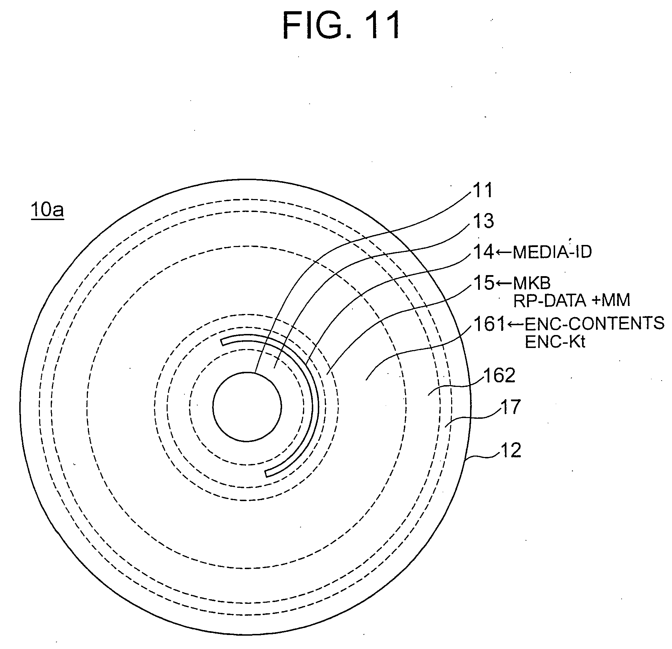

FIG. 11 is a plan view representing a recordable optical disk 10a, which is a recording medium according to the third embodiment of the present invention. FIG. 11 corresponds to FIG. 1.

On the optical disk 10a, a clamping area 13, a BCA (Burst Cutting Area) 14, a lead-in (Lead-IN) area 15, a recorded area 161, an unrecorded area 162, and a lead-out (Lead-OUT) area 17 are arranged between an inner circumference 11 and an outer circumference 12. Specifically, instead of the data area 16 of FIG. 1, the recorded area 161 and the unrecorded area 162 are arranged. Incidentally, the recorded area 161 and the unrecorded area 162 are together referred to as a recording area.

In the BCA 14, instead of the volume identifier (Volume-ID) of FIG. 1, a media identifier (Media-ID) for identifying each optical disk 10a is arranged.

In the lead-in area 15, in addition to a media key block (MKB), embedded proprietary data (RP-Data+MM) is recorded. The recording area of the embedded proprietary data (RP-Data+MM) is different from FIG. 1 because recording in the recorded area 161 and the unrecorded area 162 of the optical disk 10a is expected to be performed by a user.

By using a file of a trademark design or the like, of which astorage mediummanufacturing maker has the ownership,as proprietary data (RP-Data) included in the embedded proprietary data (RP-Data+MM), it becomes easier to respond to illegal copying of the optical disk 10a. Specifically, it becomes easy to apply the Copyright Law, the Trademark Law, the Unfair Competition Prevention Law, or the like against an act of copying the embedded proprietary data (RP-Data+MM) , the proprietary data (RP-Data), or the optical disk 10a itself as it is to manufacture the identical recording/reproducing medium.

### B. Manufacturing of the Recording Medium

Regarding the optical disk 10a, manufacturing thereof is performed by a manufacturer of recording media, but recording of data is expected to be performed by a general user. Accordingly, manufacturing of the optical disk 10a and recording of the contents will be described separately.

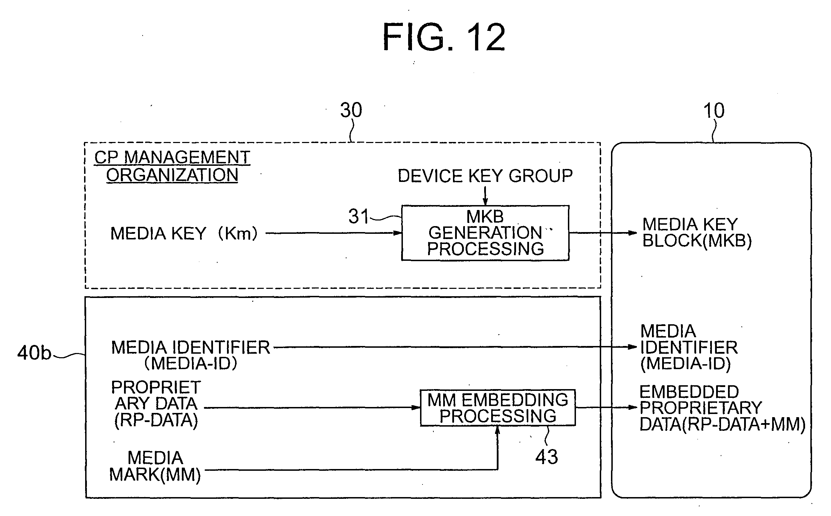

FIG. 12 is a view showing a procedure of recording data in an optical disk 10a during manufacturing.

A CP management organization 30 supplies a media key block (MKB) tothediskmanufacturer. The media key block (MKB) is generated by an MKB generation processing unit 31 from a device key group and a media key (Km).

The media identifier (Media-ID), the proprietary data (RP-Data), and the media mark (MM) are determined appropriately by the disk manufacturer and stored in a disk writing device 40b.

The media key block (MKB) is recorded in the lead-in area 15 of the optical disk 10 by the disk writing device 40b.

The media identifier (Media-ID) is recorded in the BCA 14 by the disk writing device 40b.

In a media mark embedding processing unit 43, the embedded proprietary data (RP-Data+MM) generated from the proprietary data (RP-Data) and the media mark (MM) is recorded in the lead-in area 15 by the disk writing device 40b.

### C. Recording of Contents on the Recording Medium

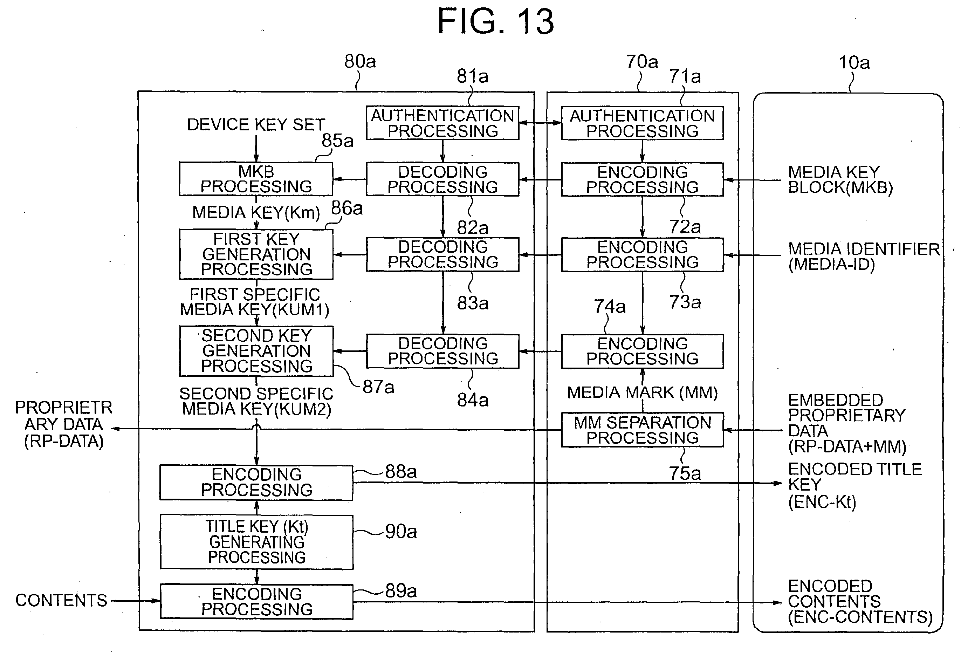

FIG. 13 is a view showing a procedure of recording contents on the optical disk 10a.

The contents are encoded and recorded on the optical disk 10a using an optical disk writing device 70a and an AV encoder module 80a.

Authentication is performed mutually between authentication processing units 71a and 81a of the optical disk writing device 70a and the AV encoder module 80a, respectively. This authentication is performed for determining encoding and decoding methods in later-described encoding processing units 72a to 74a and decoding processing units 82a to 84a.

By encoding and sending/receiving key information between the optical disk writing device 70a and the AV decoder module 80a, leakage of the key information and the like can be prevented.

After the authentication, the optical disk writing device 70a reads out the media key block (MKB) and the media identifier (Media-ID) respectively from the lead-in area 15 and the BCA 14 of the optical disk 10, and transmits them to the AV encoder module 80a. Upon this transmission, the media key block (MKB) and the media identifier (Media-ID) are encoded and outputted by the encoding processing units 72a and 73a, and decoded by the decoding processing units 82a and 83a. This is for preventing leakage of the media key block (MKB) and the media identifier (Media-ID).

Further, the optical disk writing device 70a reads out the embedded proprietary data (RP-Data+MM) from the lead-in area 15 and separates the media mark (MM) in a media mark (MM) separating unit 75a. The separated proprietary data (RP-Data) and media mark (MM) are transmitted from the optical disk writing device 70a to the AV encoder module 80a. At this time, the media mark (MM) is encoded and outputted by the encoding processing unit 71a, and decoded in the decoding processing unit 84a. This is for preventing leakage of the media mark (MM) from the output of the optical disk writing device 70a.

In the AV encoder module 80a, the following processing is carried out. Specifically, in a media key block (MKB) processing unit 85a, a media key (Km) is generated from the media key block (MKB) and the device keys which are stored in the AV encoder module 80a. Further, in a first key generating unit 86a, a first specific media key (Kum1) is generated from the media key (Km) and the media identifier (Media-ID). In a second key generating unit 87a, the first specific media key (Kum1) is converted with the media mark (MM) into a second specific media key (Kum2).

A title key (Kt) is generated and outputted from a title key generating unit 90a. For this title key generating unit 90a, a random number generator can be used.

In an encoding processing unit 88a, the title key (Kt) is encoded with the second specific media key (Kum2) to generate an encoded title key (Enc-Kt), which is then written in the recording area of the optical disk 10a by the optical disk writing device 70a.

On the other hand, in the encoding processing unit 89a, the contents are encoded with the title key (Kt) to generate encoded contents (Enc-contents), which are then written in the recording area of the optical disk 10a by the optical disk writing device 70a.

The proprietary data (RP-Data) can be appropriately used in a computer or the like, and can be used, for example, to display a trademark of a disk manufacturer when the optical disk 10a is mounted.

### D. Reproducing of Contents from the Recording Medium

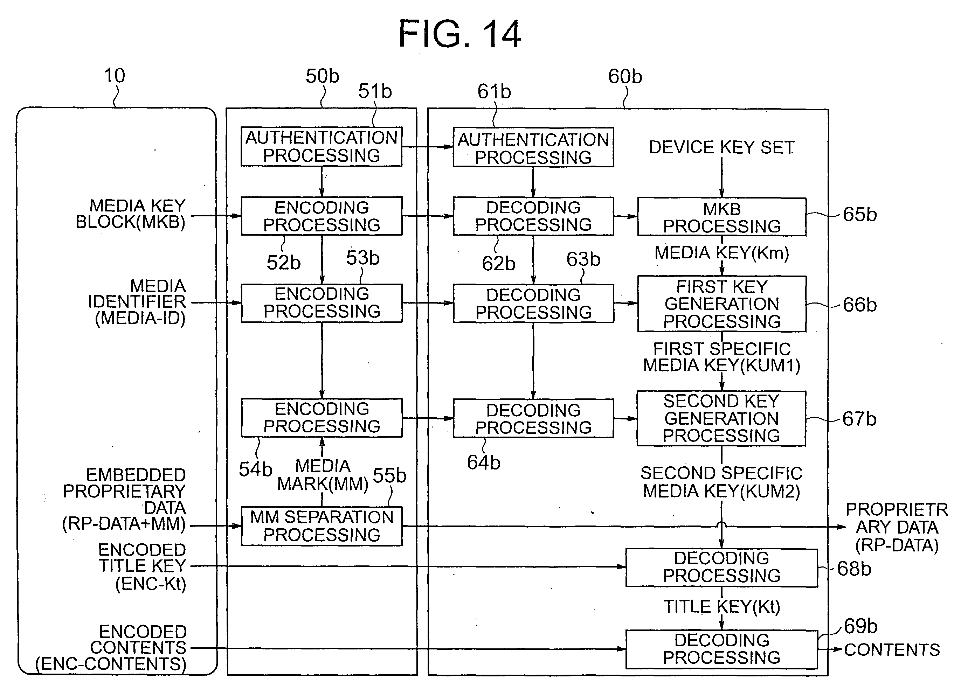

FIG. 14 is a view showing a procedure of reproducing the optical disk 10a to decode the encoded contents (Enc-contents). Here, a configuration of a case that the optical disk 10 is reproduced using a system such as a computer is shown. Specifically, data is read by an optical disk reading device 50b, and an AV (Audio Visual) decoder module 60b decodes the encoded contents (Enc-contents).

Contents of processing shown in FIG. 14 are similar to the contents of processing in FIG. 3 except that the volume identifier (Volume-ID) is replaced with the media identifier (Media-ID). Accordingly, a detailed description of FIG. 14 is omitted.

### (Fourth Embodiment)

Next, a fourth embodiment of the present invention will be described. In this embodiment, the configuration of an optical disk 10a to be used and a manufacturing procedure thereof are the same as those in the third embodiment. Accordingly, only recording of contents on a recording medium and reproducing of contents therefrom will be described.

### A. Recording of Contents on the Recording Medium

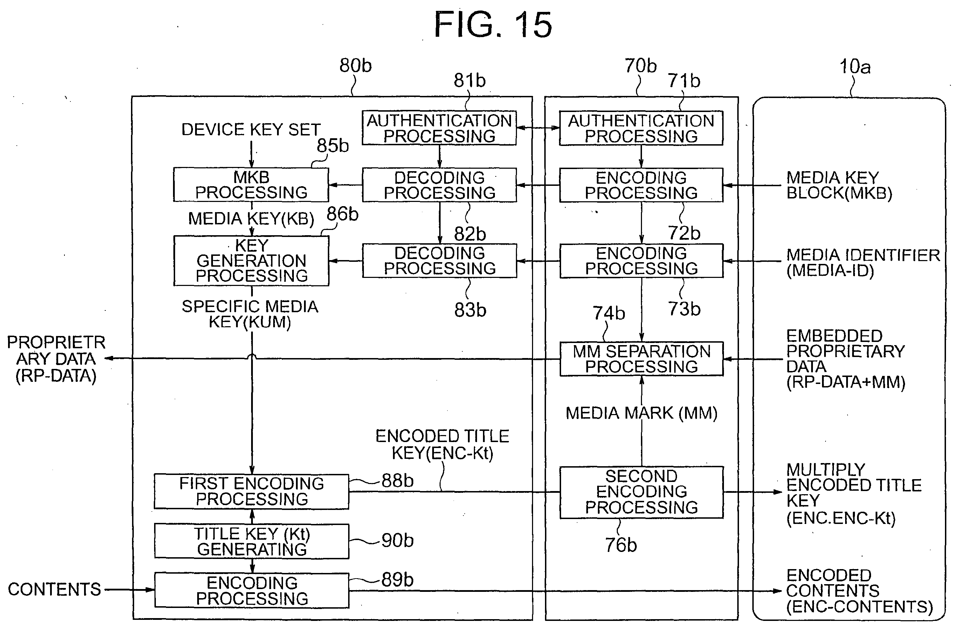

FIG. 15 is a view showing a procedure of encoding and recording contents on the optical disk 10a. FIG. 15 corresponds to FIG. 13.

Here, instead of the first and second key generation processing units 86a and 87a of FIG. 13, a key generation processing unit 86b is arranged. Further, instead of the encoding processing unit 88a of FIG. 13, first and second encoding processing units 88b and 76b are arranged.

In the key generation processing unit 86b, a specific media key (Kum) is generated from a media key (Km) and a media identifier (Media-ID).

In the first encoding processing unit 88b, a title key (Kt) is encoded with the specific media key (Kum) and becomes an encoded title key (Enc-Kt). Furthermore, in the second encoding processing unit 76b, the encoded title key (Enc-Kt) is encoded with the media mark (MM) to generate a multiply encoded title key (Enc.Enc-Kt). The generated multiply encoded title key (Enc.Enc-Kt) is recorded on the optical disk 10a.

By such a configuration, it becomes possible to confine a media mark (MM) signal inside a drive. This will be described later.

### B. Reproduction of Contents from the Recording Medium

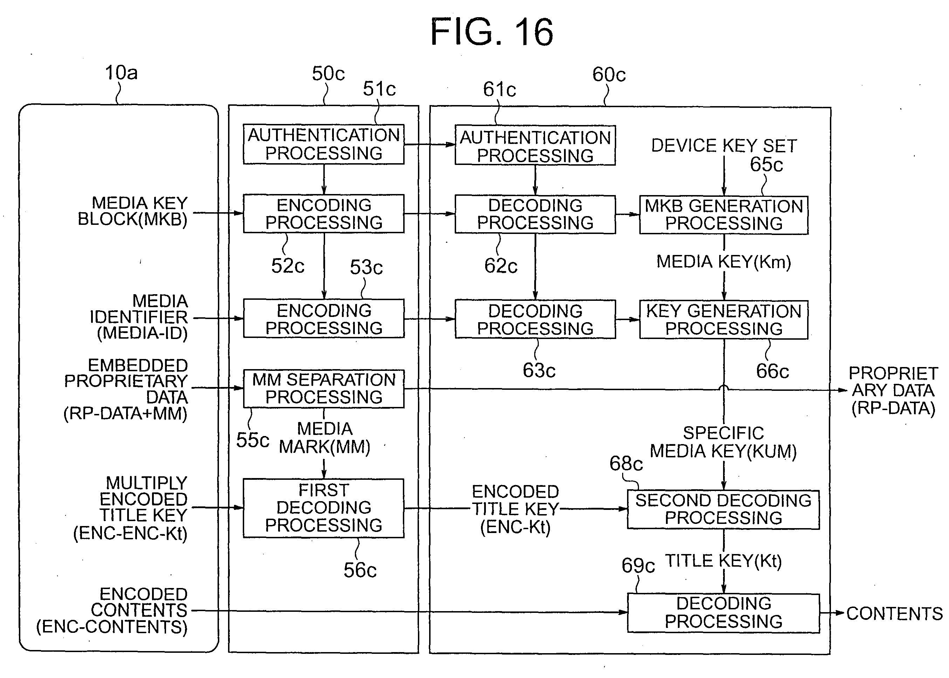

FIG. 16 is a view showing a procedure of reproducing the optical disk 10, on which the contents are recorded by the method shown in FIG. 15, to thereby decode the encoded contents (Enc-contents) . FIG. 16 corresponds to FIG. 14.

Here, instead of the first and second key generation processing units 66b and 67b of FIG. 14, a key generation processing unit 66c is arranged. Further, instead of the decoding processing unit 68b of FIG. 14, first and second decoding processing units 56c and 68c are arranged.

By an optical disk reading device 50c, embedded proprietary data (RP-Data+MM) is read out from the optical disk 10a, and the media mark (MM) is separated by a media mark separation processing unit 55c.

The multiply encoded title key (Enc.Enc-Kt) read out by the optical disk reading device 50c from the optical disk 10a is decoded in the first decoding processing unit 56c to generate the encoded title key (Enc-Kt), which is then sent to an AV decoder module 60c.

In the AV decoder module 60c, a specific media key (Kum) is generated from the media key (Km) and the volume identifier (Volume-ID) in the key generation processing unit 66c. In the second decoding processing unit 68c, the encoded title key (Enc-Kt) is decoded with the specific media key (Kum) to generate the title key (Kt).

The encoded contents (Enc-contents) are decoded by the title key (Kt) to reproduce contents in plaintexts.

As is clear from the foregoing, the media mark (MM) separated from the embedded proprietary data (RP-Data+MM) is used only inside the optical disk reading device 50c, and outputting of which to the AV decoder module 60c is not necessary. Specifically, since the media mark (MM) will not be included in data read out by the optical disk reading device 50c, it becomes possible to prevent reading out of the media mark (MM) and using it to decode the encoded contents (Enc-contents) by a third person.

### (Fifth Embodiment)

Next, a fifth embodiment of the present invention will be described. In this embodiment, only the method of embedding the media mark (MM) is different from those in the other embodiments. Incidentally, this embodiment represents a case of performing recording on the optical disk 10, but the optical disk 10a may be used instead.

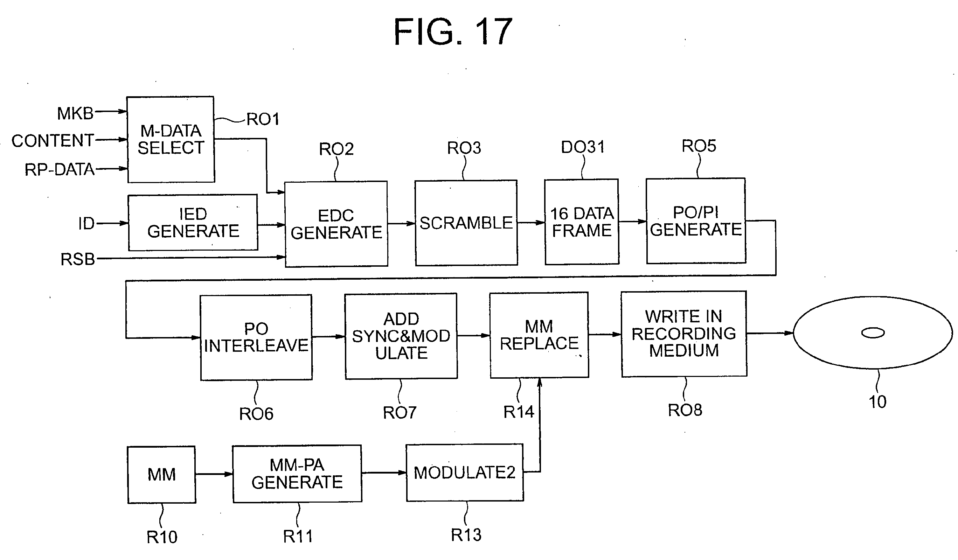

FIG. 17 represents a procedure of a case that a special modulating method is introduced as an embedding method of the media mark (MM). FIG. 17 corresponds to FIG. 14.

The procedure up to generating error correcting codes PO (outer parity) /PI (inner parity) and adding the error correcting codes to ECC blocks in a PO/PI generating unit R05 is the same as that in FIG. 4. Here, in the ECC blocks outputted from the PO/PI generating unit R05, the PO is interleave-processed in a PO interleave unit R06, and SYNC (synchronization signal) addition and modulation processing is performed in a SYNC addition & modulation processing unit R07.

In a media mark error correcting code generating unit R11, a media mark error correcting code (MM-Pa) is generated from the media mark (MM), and thereafter modulation processing thereof is performed in a modulating unit R13.

As described above, the proprietary data (RP-Data) and the media mark (MM) are separately modulated. In other words, the media mark (MM) is modulated by a modulating method that is different from that of general main data (M-Data).

Thereafter, in a media mark replacing unit R14, a part of a modulated recording signal of the proprietary data (RP-Data) is replaced by modulated recording signals of the media mark (MM) and of the media mark error correcting code (MM-Pa) to generate a recording signal, which is then recorded on the optical disk 10.

By differentiating the modulating method of the media mark (MM) from that of the main data (M-Data), obtaining of the media mark (MM) by a third person can be prevented even if an embedding position of the media mark (MM) is found out.

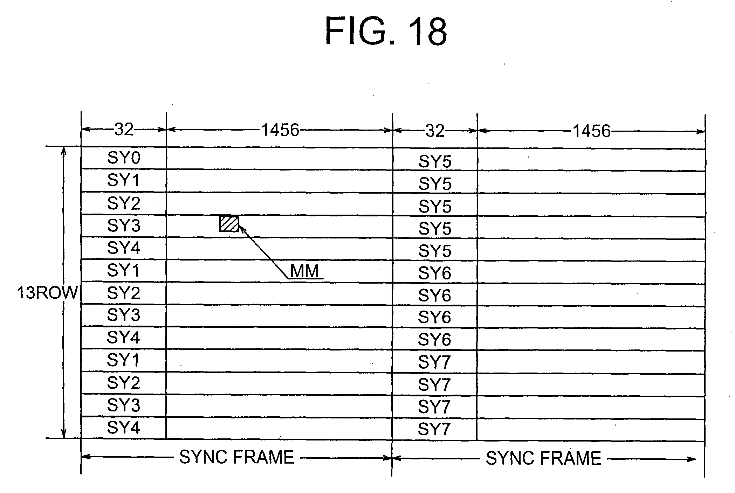

FIG. 18 is a schematic view showing a physical sector of a case that a media mark (MM) signal is embedded using the special modulating method shown in FIG. 17.

One row is constituted by a pair of "SYNC frames" of 32 + 1456 channel bits. For example, on a first row in FIG. 18, SY0 and SY5 are SYNC frames. The physical sector is constituted by aggregating 26 of such rows.

Here, the media mark (MM) is embedded in a frame SY3.

### (Sixth Embodiment)

Next, a sixth embodiment of the present invention will be described. In this embodiment, similarly to the fifth embodiment, the media mark (MM) is modulated by a modulating method that is different from that of general main data (M-Data).

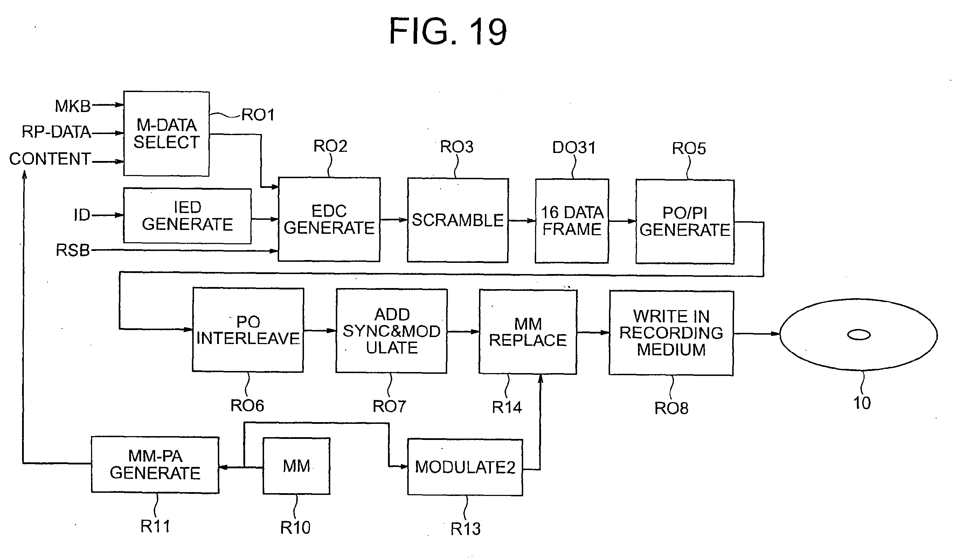

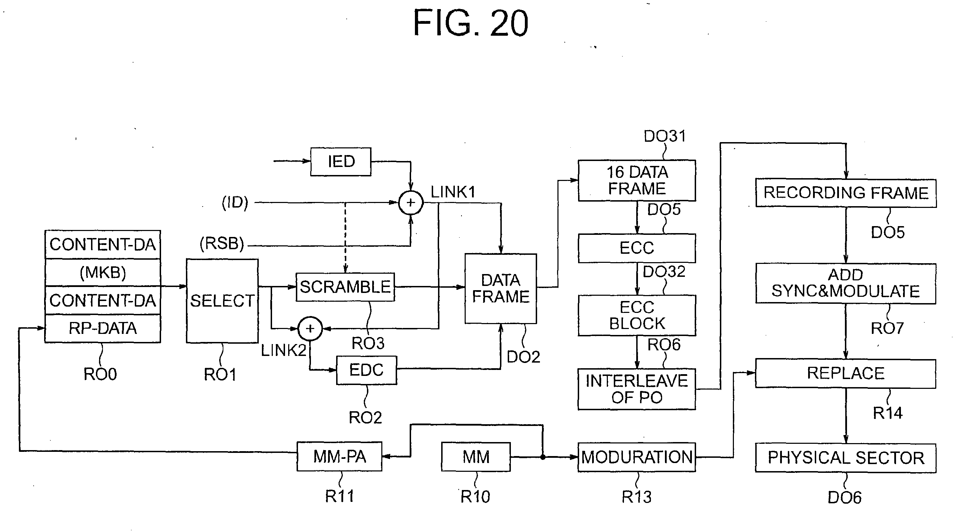

FIG. 19 represents a procedure of a case that a special modulating method is introduced as an embedding method of the media mark (MM). FIG. 19 corresponds to FIG. 17. Further, FIG. 20 is a view representing details of steps in FIG. 19, and contents of performed processing thereof are substantially the same, except that the main data (M-data) includes control data (Control-Da), and that a data frame D02 and so on are clearly specified.

Here, a media mark error correcting code (MM-Pa) is added as a part of the proprietary data (RP-Data) that is the main data (M-data). This provides the following merits.

Specifically, by embedding the media mark (MM), a kind of an error occurs on the main data side. Accordingly, by adding a media mark error correcting code (MM-Pa) to the main data side, an embedding amount of the media mark (MM) into the main data is reduced.

Moreover, by adding the error correcting code to the main data including the media mark error correcting code (MM-Pa), reliability of the media mark error correcting code (MM-Pa) itself can be improved.

Specifically, while reproducing, error correction processing can be performed on the main data to correct an error of the media mark error correcting code (MM-Pa) itself. Then, this media mark error correcting code (MM-Pa) can be used to perform error correction processing of the media mark (MM).

As described above, when the media mark error correcting code (MM-Pa) is added to the main data side, reliability of the media mark (MM) improves in comparison with a case that both the media mark (MM) and the media mark error correcting code (MM-Pa) are embedded.

Incidentally, when the media mark error correcting code (MM-Pa) is incorporated in the main data and leaked to the outside, reproduction of the media mark (MM) by only the media mark error correcting code (MM-Pa) isdifficult, so that confidentiality thereof will not be largely decreased.

### (Seventh Embodiment)

Next, a seventh embodiment of the present invention will be described.

In this embodiment, a watermark (WM) is embedded in design information inside the proprietary data (RP-Data). The media mark (MM) which has been described is electronic watermark information that basically will not be outputted from an optical disk reading device, in other words, will not be copied. Here, the watermark (WM) is considered as electronic watermark information which is outputted from the optical disk reading device and copied similarly to normal data on the optical disk 10.

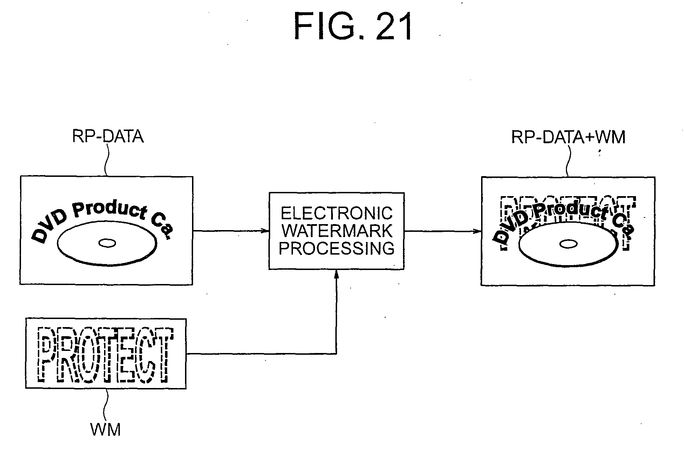

FIG. 21 represents steps of generating embedded proprietary data (RP-Data+WM) by embedding the watermark (WM) in the design information inside the proprietary data (RP-Data).

This watermark (WM) iscopiable, but difficult to be recognized when the optical disk 10 is viewed. Specifically, the watermark (WM) described here is basically invisible, and a design of the watermark (WM) does not appear in a visible form on an image of the embedded proprietary data (RP-Data+WM) of FIG. 21.

Thus, by embedding the invisible watermark (WM) , the watermark (WM) will be copied unknowingly when the proprietary data (RP-Data) is copied. As a result, when the proprietary data (RP-Data) is copied, a tracking research thereof becomes easy.

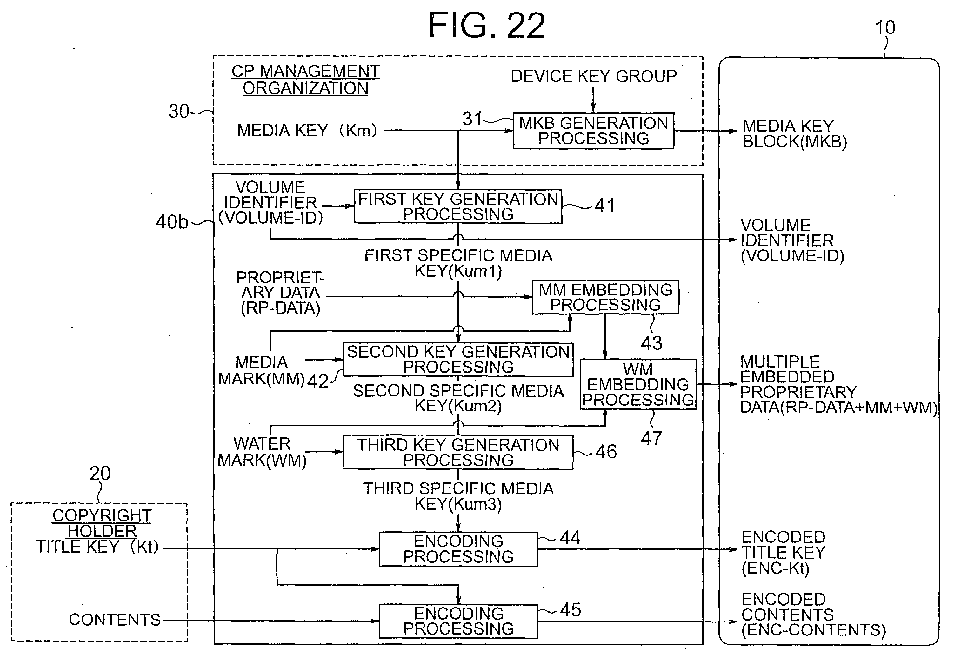

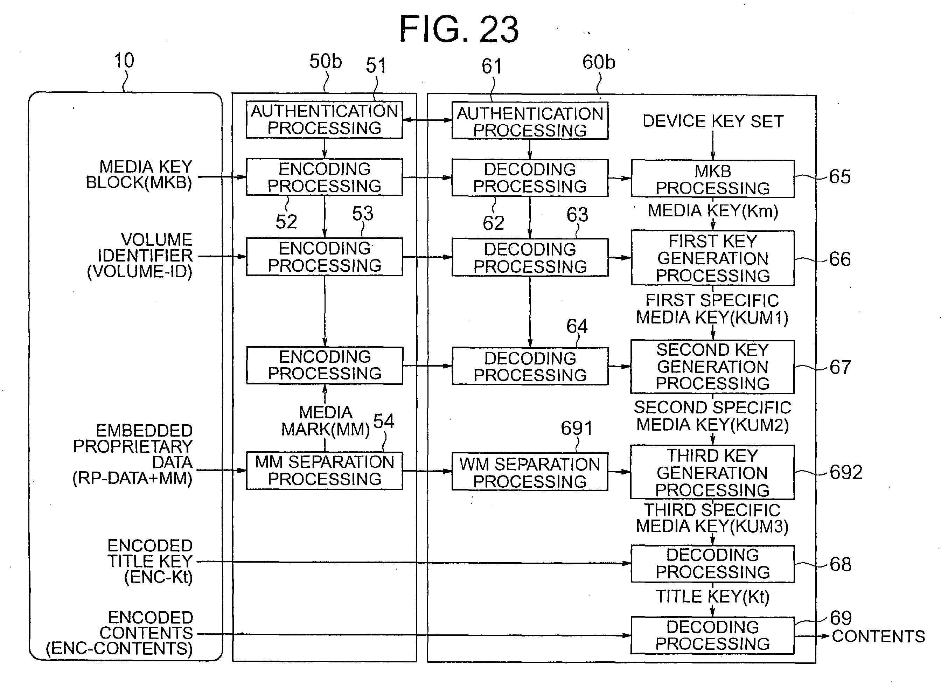

FIG. 22 and FIG. 23 are views representing procedures of encoding and decoding contents using the media mark (MM) and the watermark (WM) together. FIG. 22 and FIG. 23 correspond to FIG. 2 and FIG. 3 respectively. The watermark (WM) in this case is used as an encryption key rather than image information such as of FIG. 21.

Generation of a second specific media key (Kum2) from a media key block (MKB), a volume identifier (Volume-ID), and a media mark (MM) is the same as that in FIG. 2.

In FIG. 22, a third key generation processing unit 46 and a watermark embedding processing unit 47 are added to FIG. 2. The second specific media key (Kum2) is converted with the watermark (WM) into a third specific media key (Kum3), which is then used to encode a title key (Kt). Moreover, the watermark (WM) is further embedded in the embedded proprietary data (RP-Data+MM), which is then recorded as multiply embedded proprietary data (RP-Data+MM+WM) on the optical disk 10.

In FIG. 23, a watermark separation processing unit 691 and a third key generation processing unit 692 are added to FIG. 3. The media mark (MM) is separated from the multiply embedded proprietary data (RP-Data+MM+WM) in a media mark separation processing unit 55 to generate the embedded proprietary data (RP-Data+WM). Furthermore, the watermark (WM) is separated from the embedded proprietary data (RP-Data+WM) by the watermark separation processing unit 691. Thereafter, the second specific media key (Kum2) is converted with the watermark (WM) into the third specific media key (Kum3), which is then used to decode the title key (Kt).

Incidentally, it is possible to detect an illegal copy by making the media mark (MM) and the watermark (WM) to be the same or to have a relationship which satisfies a certain relational expression, and by comparing the both.

Specifically, when a certain association is established between the media mark (MM) and the watermark (WM) , it becomes possible to judge that the optical disk 10 is a copied item when either of the media mark (MM) or the watermark (or a part of them) is missing. As already described, since the media mark (MM) is normally difficult to be copied, the watermark (WM) is copied when data is copied from the optical disk 10, so that the media mark (MM) becomes missing. Thus, when the optical disk 10 on which the media mark (MM) and the watermark (WM) are recorded in a correspondence is copied, a chance for the correspondence to be broken is high.

### (Other Embodiments)

As described above, in the aforementioned embodiments, by embedding an electronic watermark (media mark (MM)) that disappears and/or an electronic watermark (watermark (WM)) that does not disappear into proprietary data (RP-Data) such as a data file of a mark of which a recording medium manufacturer has the ownership, contents recorded on a recording medium and the recording medium itself can be protected.

Embodiments of the present invention can be expanded/modified without being limited to the above-described embodiments, and such expanded/modified embodiments are also included in the technical scope of the present invention.

## Claims

1. A recording medium, comprising:
embedded proprietary data, which is configured by embedding decoding key data for decoding encoded contents into correcting code added proprietary data, which is configured by adding an error correcting code to proprietary data that is a subject of ownership.

2. The recording medium as set forth in claim 1,
wherein the ownership includes at least one of a copyright, a trademark, and a well-known name.

3. The recording medium as set forth in claim 1,
wherein the decoding key data is broken by performing error correction processing on said embedded proprietary data using the error correcting code.

4. The recording medium as set forth in claim 1,
wherein said embedded proprietary data is generated by replacing a part of the proprietary data in the correcting code added proprietary data by the decoding key data.

5. The recording medium as set forth in claim 4,
wherein, in advance of the replacement, the correcting code added replicator proprietor data is modulated by a first modulating method, and the decoding key data is modulated by a second modulating method, which is different from the first modulating method.

6. The recording medium as set forth in claim 5,
wherein the decoding key data is broken by demodulating said embedded proprietary data by a first demodulating method corresponding to the first modulating method.

7. The recording medium as set forth in claim 1,
wherein said embedded proprietary data includes operation data obtained by performing operation processing of a part of the proprietary data in the correcting code added proprietary data and the decoding key data.

8. The recording medium as set forth in claim 7,
wherein the operation is addition of a part of the proprietary data to the decoding key data.

9. The recording medium as set forth in claim 1,
wherein the decoding key data is arranged in a dispersed manner inside said embedded proprietary data.

10. The recording medium as set forth in claim 9,
wherein said embedded proprietary data includes data representing an arrangement of the decoding key data in said embedded proprietary data.

11. The recording medium as set forth in claim 1, further comprising:
a key data error correcting code for correcting an error of the decoding key data.

12. The recording medium as set forth in claim 11,
wherein the key data error correcting code is included in said embedded proprietary data.

13. The recording medium as set forth in claim 1,
wherein the proprietary data includes unconfirmable data which is not confirmed while reproducing said recording medium.

14. The recording medium as set forth in claim 13,
wherein the unconfirmable data functions as second decoding key data for decoding the encoded contents.

15. A recording medium writing device, comprising:
an embedded proprietary data generating unit which generates embedded proprietary data, which is configured by embedding decoding key data for decoding encoded contents into proprietary data that is a subject of ownership; and
a writing unit which writes the generated embedded proprietary data on a recording medium.

16. A recording medium reading device, comprising:
a contents reading unit which reads encoded contents from a recording medium;
a proprietary data reading unit which reads embedded proprietary data, which is configured by embedding decoding key data for decoding encoded contents into proprietary data that is a subject of ownership, from the recording medium;
a separating unit which separates the decoding key data from the read embedded proprietary data; and
a decoding unit which decodes the read encoded contents using the separated decoding key data.

17. A recording medium writing method, comprising:
generating embedded proprietary data, which is configured by embedding decoding key data for decoding encoded contents into proprietary data that is a subject of ownership; and
writing the generated embedded proprietary data on a recording medium.

18. A recording medium reading method, comprising:
reading encoded contents from a recording medium;
reading embedded proprietary data, which is configured by embedding decoding key data for decoding encoded contents into proprietary data that is a subject of ownership, from the recording medium;
separating the decoding key data from the read embedded proprietary data; and
decoding the read encoded contents using the separated decoding key data.
